Europäisches Patentamt

European Patent Office

Office européen des brevets

(11) Numéro de publication : **0 598 655 A1**

# (12) DEMANDE DE BREVET EUROPEEN

(21) Numéro de dépôt : **93402776.4**

(22) Date de dépôt : **16.11.93**

(51) Int. Cl.$^5$ : **H04B 7/005**, H04L 25/03

(30) Priorité : **18.11.92 FR 9213847**

(43) Date de publication de la demande :
**25.05.94 Bulletin 94/21**

(84) Etats contractants désignés :
**AT BE CH DE DK ES FR GB IT LI NL SE**

(71) Demandeur : **ALCATEL N.V.**
**Strawinskylaan 341,**
**(World Trade Center)**
**NL-1077 XX Amsterdam (NL)**
(84) **BE CH DE DK ES GB IT LI NL SE AT**

(71) Demandeur : **ALCATEL RADIOTELEPHONE**
**10, rue de la Baume**
**F-75008 Paris (FR)**
(84) **FR**

(72) Inventeur : **Mourot, Christophe**
**36, rue Paul Bert**
**F-92600 Asnières (FR)**
Inventeur : **Wautier, Armelle**
**c/o Supelec-Plateau du Moulon**
**F-91190 Gif sur Yvette (FR)**
Inventeur : **Dany, Jean-Claude**
**c/o Supelec-Plateau du Moulon**
**F-91190 Gif Sur Yvette (FR)**

(74) Mandataire : **Pothet, Jean Rémy Emile Ludovic**
**c/o SOSPI**
**14-16 rue de la Baume**
**F-75008 Paris (FR)**

(54) **Séquence d'apprentissage pour l'estimation d'un canal de transmission et dispositif d'estimation correspondant.**

(57)    La présente invention concerne une séquence d'apprentissage pour l'estimation d'un canal de transmission et dispositif d'estimation adapté à une telle séquence.

La séquence d'apprentissage pour l'estimation d'un canal de transmission de longueur L comprend une séquence de garde de longueur L suivie d'une séquence de référence de longueur N, telle que sa longueur totale N+L soit supérieure ou égale à 2L+1 et telle que la matrice de transmission A qui lui est associée soit ainsi définie que le produit de la transposée hermitienne $A^H$ de la matrice de transmission par cette matrice de transmission A soit inversible.

EP 0 598 655 A1

La présente invention concerne une séquence d'apprentissage pour l'estimation d'un canal de transmission. Elle concerne également une séquence de symboles comprenant des symboles de données et une telle séquence d'apprentissage, ainsi qu'un dispositif d'estimation d'un canal de transmission prévu pour fonctionner avec une telle séquence d'apprentissage.

Dans un système de transmission, notamment par ondes radio, un émetteur émet une séquence de symboles dans un canal de transmission à destination d'un récepteur. La séquence émise subit des altérations dans le canal de transmission si bien que la séquence de symboles reçus par le récepteur ne lui est pas identique. La principale de ces altérations est l'interférence entre symboles qui est dûe au fait qu'un symbole émis peut emprunter plusieurs trajets dans le canal de transmission. En effet si deux trajets au moins présentent un écart supérieur à la distance séparant deux symboles émis successivement, un symbole empruntant un de ces trajets va venir interférer avec un symbole suivant empruntant un autre trajet plus court.

Pour corriger l'interférence entre symboles dans le récepteur, on utilise un égaliseur qui, pour fonctionner correctement, doit connaître la réponse impulsionnelle du canal de transmission. A cette fin, des symboles particuliers émis dans une séquence d'apprentissage sont des symboles connus, par opposition aux symboles de données qui font l'objet de la transmission et qui, par hypothèse, ne sont pas connus du récepteur. Il est ainsi courant de prévoir qu'un paquet de symboles destiné à un récepteur particulier comprenne successivement des symboles de données, une séquence d'apprentissage et de nouveau des symboles de données, la séquence d'apprentissage étant ainsi disposée au centre du paquet.

La séquence d'apprentissage est choisie en fonction des caractéristiques du canal de transmission et plus particulièrement en fonction de sa longueur.

En effet, compte-tenu du fait que les symboles sont émis régulièrement et présentent donc une périodicité que l'on nomme durée-symbole, la longueur du canal se définit comme le nombre de durée-symboles qui est équivalent à la différence du trajet le plus long et du trajet le plus court de ce canal.

Pour établir la réponse impulsionnelle du canal, on utilise, dans le récepteur, un dispositif d'estimation de canal qui génère une réplique de cette séquence d'apprentissage et la corrèle avec la séquence correspondante de symboles reçus. Le résultat de la corrélation est un jeu de coefficients $h_i$ où i varie de O à L, L étant la longueur du canal, ce jeu de coefficients étant prévu pour renseigner l'égaliseur. Le trajet le plus direct du canal est représenté par $h_o$, tandis que les autres coefficients représentent les trajets plus longs qui produisent des interférences avec le premier.

Dans le cas le plus général, ces coefficients sont de nature complexe car les symboles reçus peuvent se décomposer sur une base orthogonale en deux composantes, l'une dite "en phase" et l'autre "en quadrature". Par la suite, on conviendra de nommer ce jeu de coefficients réponse impulsionnelle.

La séquence d'apprentissage est toujours composée d'une première séquence de garde suivie d'une séquence de référence elle-même suivie d'une seconde séquence de garde. La première séquence de garde est formée avec les L derniers symboles de la séquence de référence tandis que la seconde séquence de garde est formée avec les L premiers symboles de cette séquence de référence. En effet, du fait de l'incertitude sur la position exacte de la séquence d'apprentissage dans la succession des symboles reçus, la corrélation qui porte seulement sur la séquence de référence est effectuée sur une séquence de symboles reçus de même longueur mais dont l'origine est déplacée jusqu'à la coïncidence de la séquence de référence générée localement et de la séquence correspondante de symboles reçus; les séquences de garde sont donc ainsi disposées pour éviter de corréler la séquence de référence locale avec des symboles de donnnées reçus. Pour de plus amples précisions sur les séquences d'apprentissage utilisées qui présentent toute la même structure, on pourra se reporter entre autres à :

- Giovanna d'ARIA, Valério ZINGARELLI :
  " Design and Performance of synchronisation techniques and Viterbi adaptative equalizers for narrowband TDMA mobile radio ", Proceedings DMR III, Copenhague, 13-15 Sept.1988;
- Dirk POPPEN : "Design of training sequence for channel impulse response measurement", COST 231, Vienna, Austria, pp 2-10, Jan.1992;
- recommandations (séries 05) du GSM définissant le système paneuropéen de radiotéléphone cellulaire numérique.

Il apparaît que pour utiliser de telles séquences d'apprentissage il faut réserver 2L symboles pour former les deux séquences de garde. Ces symboles ne peuvent donc pas être utilisés pour la transmission de données, ce qui réduit la quantité d'information que l'on peut transmettre dans un paquet.

La présente invention a ainsi pour but une séquence d'apprentissage qui permet d'accroître l'efficacité du système de transmission, à savoir la quantité d'information acheminée dans un paquet.

Ce but est atteint en choisissant une séquence d'apprentissage pour l'estimation d'un canal de transmission de longueur L comprenant une séquence de garde de longueur L suivie d'une séquence de référence de longueur N, telle que sa longueur N+L soit supérieure ou égale à 2L+1 et telle que la matrice de transmission A qui lui est associée soit ainsi définie que le produit de la transposée hermitienne AH de la matrice de transmission par cette matrice de transmission A soit inversible.

Il s'avère en effet qu'à l'aide d'une telle séquence de référence il n'est pas nécessaire de prévoir une seconde séquence de garde pour procéder à l'estimation du canal de transmission, ce qui ressortira de manière plus claire par la suite. On peut donc récupérer les symboles correspondants pour transmettre des données.

Selon un premier mode de réalisation de la séquence d'apprentissage, le produit de la transposée hermitienne AH de la matrice de transmission par cette matrice de transmission A est un multiple de la matrice identité.

Dans ce cas, les opérations nécessaires à l'estimation du canal de transmission sont particulièrement simples.

De plus, dans la séquence d'apprentissage, la séquence de référence est une séquence à amplitude constante et à auto-corrélation zéro dite séquence CAZAC.

En outre, cette séquence CAZAC est une séquence polyphase.

Selon un second mode de réalisation de la séquence d'apprentissage, la séquence de référence est une séquence à amplitude constante et à auto-corrélation zéro au voisinage du pic de corrélation dite séquence pseudo-CAZAC.

Logiquement, l'invention se rapporte aussi à une séquence de symboles comprenant des symboles de données et une séquence d'apprentissage telle que définie ci-dessus.

L'invention consiste également dans un dispositif d'estimation d'un canal de transmission de longueur L recevant à une extrémité de ce canal une séquence d'entraînement correspondant à une séquence d'apprentissage produite à l'autre extrémité du canal, cette séquence d'apprentissage se présentant comme une séquence de garde de longueur L suivie d'une séquence de référence de longueur N ayant une longueur totale N+L supérieure ou égale à 2L+1 et telle que la matrice de transmission A qui lui est associée soit ainsi définie que la matrice résultante valant le produit de la transposée hermitienne $A^H$ de la matrice de transmission par cette matrice de transmission A soit inversible,.un vecteur de réception R se définissant comme la partie de la séquence d'entraînement qui correspond à la séquence de référence, ce dispositif établissant l'estimation du canal au moyen du produit de l'inverse de la matrice résultante $(A^H A)^{-1}$ par la transposée hermitienne de la matrice de transmission $A^H$ et par le vecteur de réception R.

Naturellement, le dispositif d'estimation est prévu pour que les moyens d'estimation soient adaptés au traitement d'une séquence d'apprentissage telle que :
- la matrice résultante soit un multiple de la matrice identité ou,
- la séquence de référence soit une séquence CAZAC, une séquence polyphase, par exemple, ou,
- la séquence de référence soit une séquence pseudo-CAZAC.

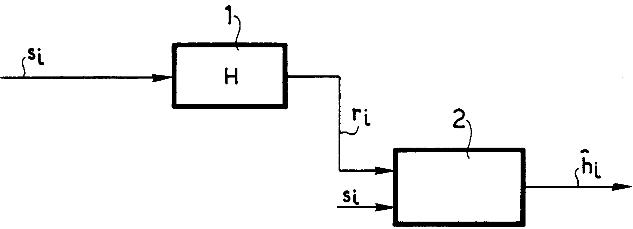

L'invention apparaîtra maintenant de manière plus précise dans le cadre d'exemples de réalisation donnés à titre indicatif en référence à la figure unique qui représente le dispositif d'estimation appliqué à un canal de transmission.

Comme représenté dans la figure, le canal de transmission 1 de réponse impulsionnelle H reçoit les symboles émis $s_i$ formant la séquence d'apprentissage et délivre les symboles reçus $r_i$ formant la séquence d'entraînement.

Le dispositif d'estimation 2 du canal de transmission reçoit également la séquence d'apprentissage $s_i$ générée localement et la séquence d'entraînement $r_i$ pour produire une estimation de la réponse impulsionnelle $\hat{H}$ du canal de transmission 1. En notant L la longueur du canal et P la longueur de la séquence d'apprentissage, le dispositif d'estimation 2 doit produire une estimation de la réponse impulsionnelle $\hat{H}$ représentée par les coefficients $\hat{h}_i$, i variant de 0 à L, à partir des symboles émis $s_i$, i variant de 1 à P, et des symboles reçus $r_i$, i variant de L+1 à P, selon le critère des moindres carrés. Il s'agit donc de minimiser l'erreur quadratique moyenne J :

$$.J = \sum_{i=L+1}^{P} |e_i|^2 \quad \text{où} \quad e_i = r_i - \sum_{k=0}^{L} \hat{h}_k \, s_{i-k}$$

En adoptant les notations suivantes :

3

$$\hat{H} = \begin{pmatrix} \hat{h}_0 \\ \hat{h}_1 \\ \cdot \\ \cdot \\ \hat{h}_L \end{pmatrix} \quad , \quad R = \begin{pmatrix} r_{L+1} \\ r_{L+2} \\ \cdot \\ \cdot \\ r_p \end{pmatrix} \quad , \quad E = \begin{pmatrix} e_{L+1} \\ e_{L+2} \\ \cdot \\ \cdot \\ e_p \end{pmatrix}$$

En considérant que l'opérateur de transposition Hermitien est représenté par .$^H$ et que l'opérateur de conjugaison est représenté par .$^*$ :

$$\hat{H}^H = \begin{pmatrix} \hat{h}_0^* & \hat{h}_1^* & \cdot & \cdot & \hat{h}_L^* \end{pmatrix}$$

$$R^H = (R_L^* + 1\ r_L^* + 2 .. r_p^*)$$
$$E^H = (e_L^* + 1\ e_L^* + 2 .. e_p^*)$$

En introduisant la matrice de transmission A et sa transposée Hermitienne A$^H$

$$A^H = \begin{pmatrix} s_{L+1}^* & s_{L+2}^* & \cdot & \cdot & s_p^* \\ s_L^* & s_{L+1}^* & \cdot & \cdot & s_{P-1}^* \\ \cdot & \cdot & \cdot & \cdot & \cdot \\ \cdot & \cdot & \cdot & \cdot & \cdot \\ s_1^* & s_2^* & \cdot & \cdot & s_{P-L}^* \end{pmatrix}$$

On peut alors écrire :
$$E = R - A\hat{H}$$
$$J = E^H E$$

La solution est donnée par l'ensemble des coefficients $\hat{h}_i$ qui annulent la dérivée de l'erreur quadratique moyenne J par rapport à l'estimation de la réponse impulsionnelle $\hat{H}$ :

$$\frac{\partial J}{\partial \hat{H}} = -2A^H R + 2A^H A \hat{H}$$

$$(A^H A)\hat{H} = A^H R$$

On conviendra de nommer vecteur de réception le vecteur R, ce vecteur comprenant les symboles reçus correspondant à ceux de la séquence d'apprentissage émis dans le canal de transmission A.

La transposée hermitienne A$^H$ de la matrice de transmission est complètement définie par les symboles $s_i$ de la séquence d'apprentissage. Elle comprend N colonnes (N = P-L) et L+1 lignes. L'équation précédente donnera une solution unique pour l'estimation de la réponse impulsionnelle $\hat{H}$ si le nombre de colonnes N de la transposée hermitienne A$^H$ de la matrice de transmission est supérieur ou égal à son nombre de lignes :
$$N \geq L+1$$
$$P \geq 2L+1$$

Il s'ensuit que la séquence d'apprentissage doit avoir au moins 2L+1 coefficients.

Par ailleurs, pour accéder aux coefficients $\hat{h}_i$, il faut que la matrice A$^H$A soit inversible.

Dans ce cas, les coefficients $\hat{h}_i$ sont obtenus par l'équation suivante :
$$\hat{H} = (A^H A)^{-1} A^H R$$

Le dispositif d'estimation 2 est prévu pour effectuer ce calcul.

La séquence d'apprentissage $S_i$ détermine totalement l'équation ci-dessus. La seule difficulté consiste à bien identifier le vecteur de réception pour pallier un décalage temporel, c'est-à-dire à associer les éléments $r_i$ aux éléments $s_i$ correspondants.

En effet, si on fait l'hypothèse qu'aucune perturbation n'est introduite dans le canal de transmission, si les coefficients $h_k$ représentent la réponse impulsionnelle réelle que l'on cherche à estimer, on a par définition :

$$r_i = \sum_{k=0}^{L} h_k s_{i-k}$$

Le problème consiste à ne pas faire d'erreur sur l'indice i, ce qui reviendrait à décaler la séquence d'apprentissage. A cet effet, on peut prévoir que cette dernière soit quasi-périodique, c'es-à-dire qu'il existe un nombre T tel que pour un i au moins :

$r_i = r_{i+T}$

On peut alors facilement rechercher deux composantes du vecteur R espacés de T et ayant la même valeur.

Or, de par la définition de $r_i$ ci-dessus, il apparaît que celui-ci est complètement déterminé par L symboles $s_j$ de la séquence d'apprentissage où j varie de i-L à i.

Ainsi la condition minimale de quasi-périodicité sera remplie si les L premiers symboles et les L derniers symboles de la séquence d'apprentissage sont identiques, ce qui conduira à l'égalité de $r_{L+1}$ et de $r_p$.

L'égalité de $r_{L+1}$ et de $r_p$ peut être facilement détectée et, dès lors, on peut procéder sans ambiguïté à l'estimation du canal.

Il faut donc que la séquence d'apprentissage se présente sous la forme d'une séquence de garde suivie d'une séquence de référence de longueur N, la séquence de garde correspondant aux L derniers symboles de la séquence de référence. Il n'est par contre pas nécessaire de disposer une séquence de garde derrière la séquence de référence si l'estimation du canal est faite comme présentée.

La condition d'inversibilité de la matrice $A^H A$ nécessaire pour la mise en oeuvre de l'invention est remplie notamment lorsque la séquence de référence est une séquence dite CAZAC, abréviation de l'expression anglaise "Constant Amplitude Zero AutoCorrelation". Des séquences de ce type sont décrites dans l'article de A. MILEWSKI : "Periodic sequences with optimal properties for channel estimation and fast start-up equalization", IBM Journal of research & development, vol.27, n°5, sept.83, pages 426-431.

Au nombre des séquences CAZAC figure une catégorie de séquences particulièrement intéressantes dans le cadre de l'invention. Il s'agit des séquences polyphases. De telles séquences sont composées à partir des racines nièmes de l'unité, c'est-à-dire que les symboles se présentent sous la forme $\exp[j(\theta + 2k\pi/n)]$ où k prend une valeur quelconque entre 0 et n-1 et où $\theta$ est un angle quelconque. On pourra consulter à ce sujet notamment :

- L.H. Zetterberg " A class of codes for polyphases signals on a band-limited gaussian channel ", IEEE Trans. on Info. Theory, IT-11, pp 385, 1965;
- A.J. Viterbi " On a class of polyphases codes for the coherent gaussian channel ", IEEE Int. Conv. Record, Part 7, pp 209, 1965.

Cette condition d'inversibilité est également remplie lorsque la séquence de référence est dite pseudo-CAZAC, c'est-à-dire lorsqu'elle se comporte comme une séquence CAZAC au voisinage du pic de corrélation. Parmi les séquences pseudo-CAZAC figurent notamment les séquences utilisées dans le système de radiotéléphone cellulaire numérique européen connu sous le nom de système GSM. si la séquence de référence est une séquence CAZAC, la matrice résultante $A^H A$ du produit de la transposée hermitienne de la matrice de transmission par cette matrice de transmission se réduit à un multiple de la matrice identité. La démonstration de cette propriété n'étant pas nécessaire à la mise en oeuvre de l'invention, elle ne sera pas plus détaillée. Cependant cette propriété présente l'intérêt de simplifier considérablement le dispositif d'estimation 2.

Si la séquence de référence n'est pas une séquence CAZAC, le calcul du produit de l'inverse de la matrice résultante par la transposée hermitienne $A^H$ de la matrice de transmission sera fait une seule fois et enregistré dans une mémoire du dispositif d'estimation 2. Dans ce cas, l'estimation du canal sera plus complexe en terme de nombres d'opérations à effectuer que dans le cas précédent car le nombre d'éléments non nuls de la matrice produit précédemment calculée est plus important.

Des simulations ont permis d'établir que le dispositif d'estimation de l'invention utilisé avec une séquence d'apprentissage formé d'une séquence de garde et d'une séquence de référence présente les mêmes performances que les dispositifs d'estimation connus utilisés avec une séquence d'apprentissage telle que ci-dessus suivie d'une séquence de garde. L'invention permet ainsi d'augmenter le nombre de symboles de données d'un paquet d'une quantité équivalente à la longueur du canal L.

5

## Revendications

**1)** Séquence d'apprentissage pour l'estimation d'un canal de transmission de longueur L comprenant une séquence de garde de longueur L suivie d'une séquence de référence de longueur N, telle que sa longueur totale N+L soit supérieure ou égale à 2L+1 et telle que la matrice de transmission A qui lui est associée soit ainsi définie que le produit de la transposée hermitienne $A^H$ de la matrice de transmission par cette matrice de transmission A soit inversible.

**2)** Séquence d'apprentissage selon la revendication 1, caractérisée en ce que le produit de la transposée hermitienne $A^H$ de la matrice de transmission par cette matrice de transmission A est un multiple de la matrice identité.

**3)** Séquence d'apprentissage selon la revendication 2, caractérisée en ce que ladite séquence de référence est une séquence à amplitude constante et à auto-corrélation zéro dite séquence CAZAC.

**4)** Séquence d'apprentissage selon la revendication 3, caractérisée en ce que ladite séquence CAZAC est une séquence polyphase.

**5)** Séquence d'apprentissage selon la revendication 1, caractérisée en ce que ladite séquence de référence est une séquence à amplitude constante et à auto-corrélation zéro au voisinage du pic de corrélation dite séquence pseudo-CAZAC.

**6)** Séquence de symboles comprenant des symboles de données et une séquence d'apprentissage selon l'une quelconque des revendications 1 à 5.

**7)** Dispositif d'estimation d'un canal de transmission de longueur L recevant à une extrémité de ce canal une séquence d'entraînement correspondant à une séquence d'apprentissage produite à l'autre extrémité du canal caractérisé en ce que, ladite séquence d'apprentissage se présentant comme une séquence de garde de longueur L suivie d'une séquence de référence de longueur N telle que sa longueur totale N+L soit supérieure ou égale à 2L+1 et telle

que la matrice de transmission A qui lui est associée

soit ainsi définie que la matrice résultante valant le produit de la transposée hermitienne $A^H$ de la matrice de transmission par cette matrice de transmission A soit inversible, un vecteur de réception se définissant comme la partie de ladite séquence d'entraînement qui correspond à ladite séquence de référence, il comprend des moyens d'estimation pour établir ladite estimation en effectuant le produit de l'inverse de ladite matrice résultante $(A^HA)^{-1}$ par la transposée hermitienne de ladite matrice de transmission $A^H$ et par ledit vecteur de réception R.

**8)** Dispositif d'estimation selon la revendication 7, caractérisé en ce que lesdits moyens d'estimation sont adaptés au traitement d'une séquence d'apprentissage telle que définie dans l'une quelconque des revendications 2 à 5.

**Office européen
des brevets**

# RAPPORT DE RECHERCHE EUROPEENNE

Numero de la demande

EP 93 40 2776

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.CL5) |
|---|---|---|---|
| A | FR-A-2 337 465 (COMPAGNIE IBM FRANCE)<br>* page 8, ligne 29 - page 10, ligne 6 *<br>* page 13, ligne 6 - page 14, ligne 7; revendication 7 *<br><br>----- | 1,3,7 | H04B7/005<br>H04L25/03 |
| | | | **DOMAINES TECHNIQUES RECHERCHES (Int.Cl.5)**<br><br>H04B<br>H04L |

Le présent rapport a été établi pour toutes les revendications

| Lieu de la recherche | Date d'achèvement de la recherche | Examinateur |
|---|---|---|
| LA HAYE | 22 Février 1994 | Bossen, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................
& : membre de la même famille, document correspondant

EPO FORM 1503 03.82 (P04C02)